# EUROPEAN PATENT APPLICATION

(11) **EP 3 594 153 A1**
(43) Date of publication of application: **15.01.2020**
(21) Application number: 18764529.6
(22) Date of filing: 07.02.2018
(51) Int. Cl.: B65G 15/20, B07C 3/08, B65G 39/18, B65H 5/06, B65H 5/02

(54) **CONVEYANCE DEVICE, CONVEYANCE METHOD APPLIED THEREIN, DISTRIBUTION DEVICE, AND SORTING DEVICE**

(30) Priority: 09.03.2017 JP 2017044831
(71) Applicant: NEC Corporation, Tokyo 108-8001 (JP); NEC Platforms, Ltd., Kawasaki-shi, Kanagawa 213-8511 (JP)
(72) Inventor: YOSHITANI Kazuhito, Tokyo 108-8001 (JP); OGATA Tetsuo, Tokyo 108-8001 (JP); MORIBE Hideyuki, Tokyo 108-8001 (JP); NAKAYAMA Hiroyuki, Kawasaki-shi Kanagawa 213-8511 (JP)
(74) Representative: Vossius & Partner Patentanwälte Rechtsanwälte mbB
(86) International application number: PCT/JP2018/004222
(87) International publication number: WO 2018/163697

(57) **Abstract**

A conveyance device includes a first guide member abutting a first surface of an object to be conveyed and configured to guide the object to be conveyed in a predetermined direction, a second guide member abutting a second surface of the object to be conveyed and configured to guide the object to be conveyed in the predetermined direction, and a presser roller that is at least deformable or movable in a direction away from the second guide member according to a thickness of the object to be conveyed while guiding the object to be conveyed sandwiched between the second guide member and the presser roller in the predetermined direction.

## Description

### TECHNICAL FIELD

The present invention relates to a conveyance device and a conveyance method applied therein that are capable of conveying various objects to be conveyed including packages such as letters, packets, or the like, and a distribution device or a sorting device configured to further convey them and sort or distribute them.

### BACKGROUND ART

In general, a conveyance device configured to convey packages such as letters or the like in an upright state and sort or distribute them is known. For example, a conveyance device disclosed in Patent Document 1 proposes a device in which mail is fed while paper items such as postcards, letters, or the like, are erected one by one, and the paper items are conveyed by a paper-conveying means while the paper items are pinched between a pair of conveyor belts.

In a conveyance device disclosed in Patent Document 2, a device is proposed in which packages are placed on a supply section constituted by a bottom belt inclined with respect to a horizontal plane by, for example, 30° and a side belt installed on the bottom belt at a right angle thereto, and the packages are supplied to a sorting device or a distribution device.

### CITATION LIST

### Patent Literature

[Patent Document 1]
   Japanese Unexamined Patent Application, First Publication No. 2001-919
[Patent Document 2]
   Japanese Unexamined Patent Application, First Publication No. 2002-219419

### SUMMARY OF INVENTION

### Problems to be solved by the Invention

However, in the conveyance device configured to sandwich paper items between the belts disclosed in Patent Document 1, while thin packages such as letters or the like can be conveyed, when a product sample or the like is enclosed in a part of an envelope, it may be difficult to convey the product because the product is only able to be held by a part of the conveyor belt. In addition, contents may be damaged when the tension of the conveyor belt is high.

In the bottom belt and the side belt disclosed in Patent Document 2, when packages are supported in an upright state and conveyed, a thin letter or fragile packages having a weak middle portion may buckle and slip or fall over, and thus, may not be conveyed.

In consideration of the above-mentioned problems, the present invention is directed to providing a conveyance device and a conveyance method applied therein, a distribution device, and a sorting device that are capable of reliably conveying all of objects to be conveyed such as packages which are thick objects, packages having an irregular thickness, paper having a middle portion that is too weak to stand upright of its own accord, or the like.

### Means for Solving the Problems

A conveyance device of an aspect according to the present invention includes a first guide member abutting a first surface of an object to be conveyed and configured to guide the object to be conveyed in a predetermined direction; a second guide member abutting a second surface of the object to be conveyed and configured to guide the object to be conveyed in the predetermined direction; and a presser roller that is at least deformable or movable in a direction away from the second guide member according to a thickness of the object to be conveyed while guiding the object to be conveyed sandwiched between the second guide member and the presser roller in the predetermined direction.

In a distribution device of an aspect according to the present invention, a plurality of the conveyance devices described above are installed in series, and the conveyance devices on a downstream side are movable in a direction crossing a conveyance direction of an object to be conveyed.

A sorting device of an aspect of the present invention includes an upstream-side conveyance device configured to send an object to be conveyed to the conveyance device described above; and a distribution device configured to distribute the objects to be conveyed sent from the conveyance device.

In a conveyance method of a conveyance device according to an aspect of the present invention, the conveyance device including a first guide member abutting a first surface of an object to be conveyed and configured to guide the object to be conveyed in a predetermined direction, and a second guide member abutting a second surface of the object to be conveyed and configured to guide the object to be conveyed in the predetermined direction, the conveyance method includes: guiding the object to be conveyed pinched between the second guide member and a presser roller in the predetermined direction, elastically deforming at least the presser roller according to a thickness of the object to be conveyed or moving the presser roller in a direction away from the second guide member, and thus, conveying the object to be conveyed.

### Advantageous Effects of Invention

According to the present invention, since a presser roller is at least deformable or movable in a direction in which the presser roller retreats with respect to a second guide member according to a thickness of an object to be conveyed, the object to be conveyed can be reliably held with no damage to the object to be conveyed. Moreover, even when the object to be conveyed has a non-uniform thickness or has no middle portion, the object to be conveyed can be reliably gripped and conveyed according to deformation or movement of the presser roller.

### BRIEF DESCRIPTION OF DRAWINGS

Fig. 1 is a perspective view of a main part of a conveyance device according to an embodiment.
Fig. 2 is a plan view of the main part of the conveyance device shown in Fig. 1.
Fig. 3 is a plan view of a movable roller unit provided on the conveyance device of the embodiment.
Fig. 4 is a front view of the movable roller unit of the embodiment.
Fig. 5 is a bottom view of the movable roller unit of the embodiment.
Fig. 6 is a perspective view of the movable roller unit of the embodiment.
Fig. 7 is a side view when the movable roller unit of the embodiment is seen in a direction A in Fig. 6.
Fig. 8 is a perspective view when the movable roller unit of the embodiment is seen from below.
Fig. 9A is a plan view of a main part of the conveyance device of the embodiment showing a conveying process of packages, which is a view showing a state before the packages are supplied to the movable roller unit.
Fig. 9B is a plan view of a main part of the conveyance device of the embodiment showing a conveying process of packages, which is a view showing a state in which packages have started to be supplied to a movable roller.
Fig. 9C is a plan view of a main part of the conveyance device of the embodiment showing a conveying process of packages, which is a view showing a state in which packages are conveyed by a side belt and a movable roller.
Fig. 10 is a plan view showing a conveyance device having a minimum configuration according to an example.

### DESCRIPTION OF EMBODIMENTS

Hereinafter, a conveyance device 1 according to an embodiment will be described with reference to the accompanying drawings.

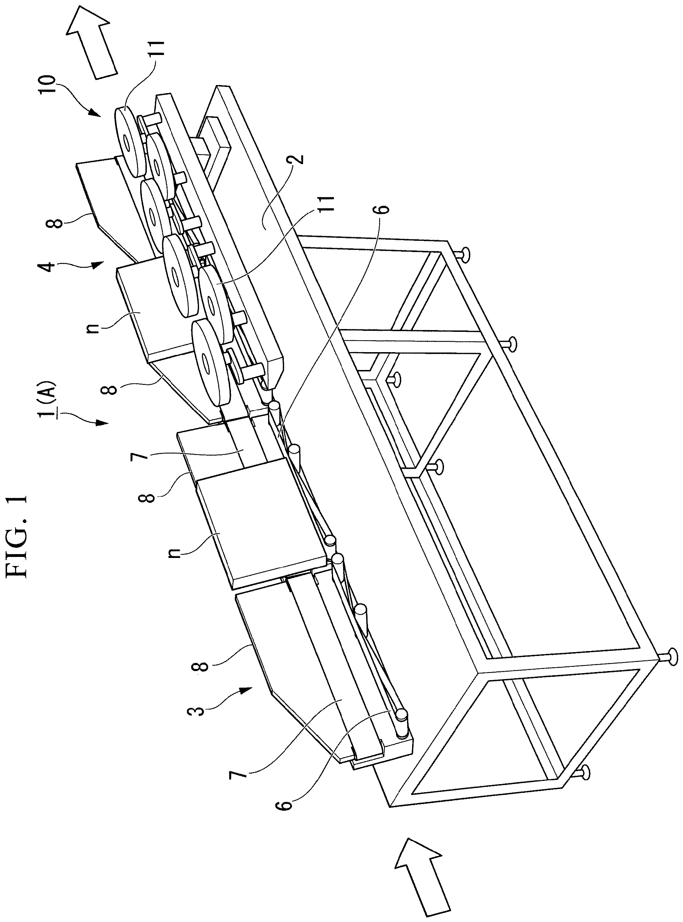

Fig. 1 is a view showing the conveyance device 1 according to the embodiment, which is a perspective view of a main part thereof. The conveyance device 1 shown in Fig. 1 is installed in, for example, the same mail sorter A as shown in Patent Document 2, which was mentioned above. In the mail sorter A, for example, a one-way transmission section (not shown) is installed upstream from the conveyance device 1, and a mail distributer (not shown) is installed downstream therefrom. Further, a sorting and collecting section (not shown) in which a plurality of collecting boxes configured to accommodate sorted postal matter are arranged is installed downstream therefrom.

In the conveyance device 1 according to the embodiment, a conveyance introduction section 3 is installed on upstream side of a frame 2 extending in a lengthwise direction, and a conveyance main body section 4 is installed on downstream side therefrom. The conveyance introduction section 3 and the conveyance main body section 4 are installed in, for example, a linear shape. A bottom belt 6 on which packages n are placed and a side belt 7 configured to receive side portions of the packages n are provided on the conveyance introduction section 3 and the conveyance main body section 4, and can support and convey the packages n. Further, a sidewall 8 extending upward and downward from the side belt 7 and configured to support the packages n protruding from the side belt 7 is installed on a back surface side of the side belt 7. The bottom belt 6 and the side belt 7 are partitioned into a plurality of blocks having a predetermined length.

Here, the packages n include, for example, paper items such as thin or thick letters or the like having an A4 size or the like, packets having a predetermined thickness, letters having a thickness expanding in a convex shape from only a part thereof such as product samples, parts, or the like, enclosed in envelopes, or the like. In addition, the packages n include paper items having no middle portion.

In the conveyance introduction section 3 and the conveyance main body section 4, the bottom belt 6 and the side belt 7 are partitioned into a plurality of blocks and extend in a linear shape. Although the bottom belt 6 and the side belt 7 are partitioned into respective blocks, the packages n conveyed one-by-one are sequentially delivered to the plurality of blocks and conveyed forward, for example, by rotating each of the partitioned belts with a driving motor that is the same driving source. Alternatively, the bottom belt 6 and the side belt 7 may be constituted by the bottom belt 6 and the side belt 7 that are elongated to be continuous in a delivery direction without being divided into a plurality of blocks.

The bottom belt 6 is installed to be inclined with respect to a horizontal plane by a predetermined angle, for example, 30°. The side belt 7 is disposed at a right angle with respect to the bottom belt 6, and inclined outward with respect to a vertical direction. The packages n each have one end surface that abuts the bottom belt 6, and a side surface that is supported by the side belt 7. The packages n are conveyed at a rotational speed at which the bottom belt 6 and the side belt 7 are synchronized with each other.

Among the packages n, paper items such as letters or the like having no middle portion (or a weak middle portion) can be conveyed if it is a short length such as the conveyance introduction section 3 or the like. However, since the conveyance becomes a long distance conveyance when the conveyance main body section 4 or the like in front thereof is included, the conveyance becomes difficult. For this reason, in the conveyance device 1 of the embodiment, a movable roller unit 10 is installed at a position facing the side belt 7 of the conveyance main body section 4.

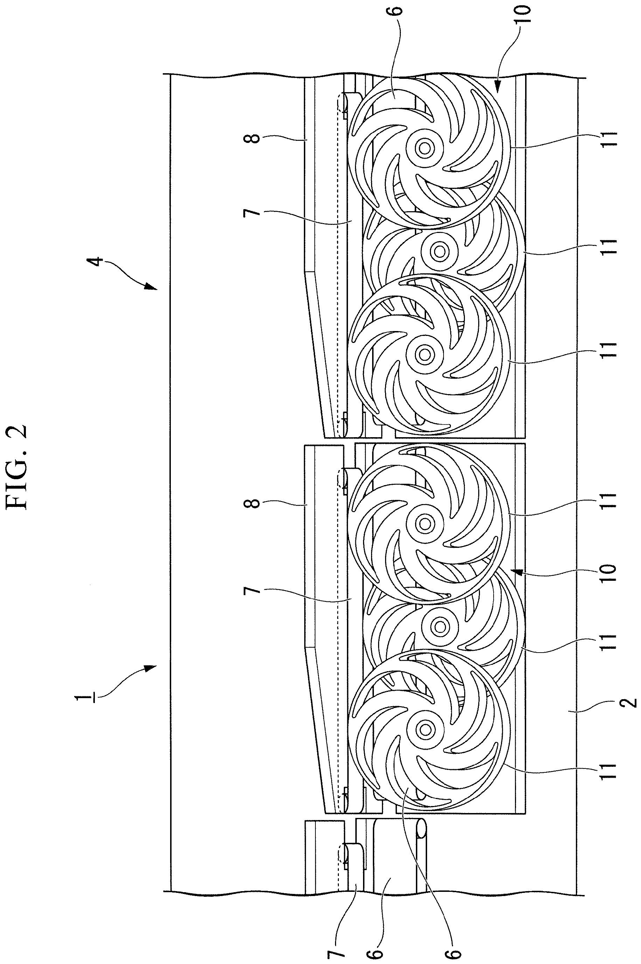

Fig. 2 is a plan view of a main part of the conveyance device 1 shown in Fig. 1. As shown in Fig. 2, the movable roller unit 10 has a plurality of movable rollers 11, and the plurality of movable rollers 11 are arranged in an installation direction of the side belt 7. In the embodiment, the three movable rollers 11 constitute the movable roller unit 10 which is one set. While two sets of movable roller units 10 may be installed, for example, as two sets in series, there may be one set or three or more sets of movable roller units 10. The movable rollers 11 are rotatable, and the packages n are conveyed when the bottom belt 6 and the side belt 7 are synchronously rotated while the packages n are sandwiched between the side belt 7 and the movable rollers 11.

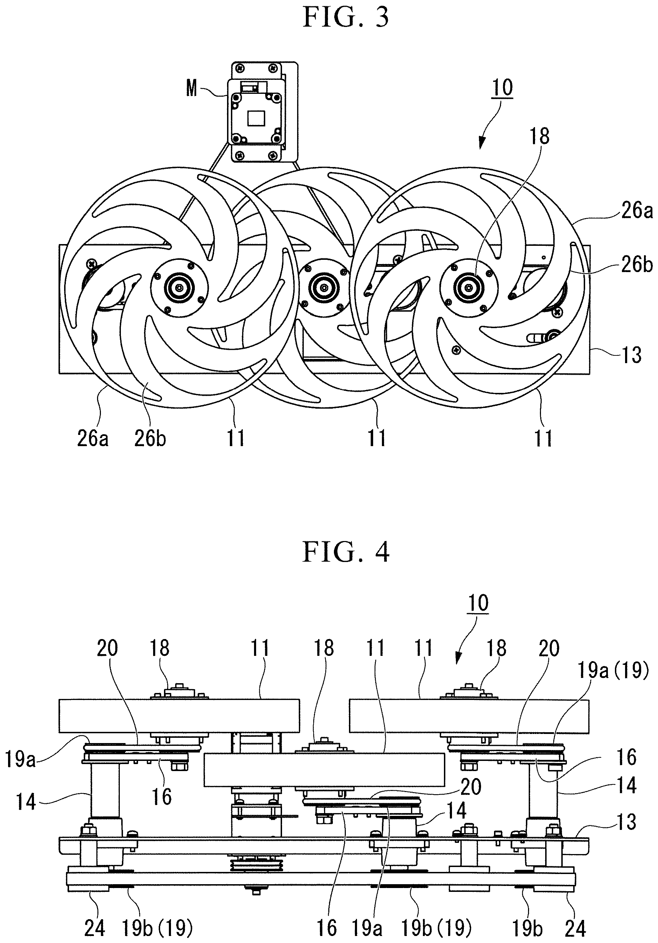

The number of movable rollers 11 that constitute the movable roller unit 10 which is one set is not limited to three. The movable rollers 11 are self-rotatable around a central shaft 18 (Fig. 3, Fig. 4) as described below. In addition, the movable rollers 11 abut or are close to the side belt 7 and are disposed in a row while the packages n are not sandwiched. When the packages n are sandwiched between the side belt 7 and the movable rollers 11, each of the movable rollers 11 is deformable can retract (be separated) from the side belt 7.

As shown in Fig. 2, the three movable rollers 11 that constitute the movable roller unit 10 which is one set are installed at positions facing the side belt 7 at two positions in a vertical direction. That is, the three movable rollers 11 are disposed on a surface of the side belt 7 at different heights in a direction perpendicular to the surface of the side belt 7. According to the example in Fig. 2, for example, the two movable rollers 11 are installed on an upper stage at a predetermined interval along the side belt 7, and the movable roller 11 is installed on a lower stage in the middle thereof. Moreover, as shown in Fig. 2, the three movable rollers 11 are arranged to partially overlap each other when seen in plan view. The movable rollers 11 are installed vertically in plural and installed to be deviated in a conveyance direction (a predetermined direction) to partially overlap each other. In other words, some of the movable rollers 11 among the plurality of movable rollers 11 are installed at heights different from those of the other movable rollers 11 such that some of the plurality of movable rollers 11 disposed along the side belt 7 overlap each other.

When the two movable rollers 11 are arranged on an upper stage, various types of packages n including letters or the like having an A4 size, which is tall, can be conveyed. In addition, when the plurality of movable rollers 11 on the upper stage sandwich together the movable rollers 11 on the lower stage, lower sections of the packages n can be sandwiched between the side belt 7 and the movable rollers 11. In particular, the packages n having no middle portion can be reliably conveyed in an upright state by the movable rollers 11 on the upper stage while the packages n are prevented from collapsing or falling. When the movable roller 11 on the lower stage is installed between the two movable rollers 11 on the upper stage, packages n having a small width can be pressed when the packages n are conveyed and disposed between the two movable rollers 11 on the upper stage. In this way, the movable rollers 11 are disposed such that pressing and conveyance of the packages n are continuously performed by the movable rollers 11.

In the movable roller unit 10 shown in Fig. 1 and Fig. 2, for example, the two movable rollers 11 are arranged on the upper stage, and the one movable roller 11 is arranged therebetween on the lower stage. For this reason, in a connecting section of the two movable roller units 10, a gap may be provided between the movable rollers 11 on the upper stage. Even in this case, the packages n can be conveyed from the movable roller unit 10 on an upstream side to the movable roller unit 10 on a downstream side due to a momentum of the conveyance.

Alternatively, in the movable roller unit 10 on the downstream side, the two movable rollers 11 may be arranged on the lower stage at both sides of the packages n in the conveyance direction, and the one movable roller 11 may be installed on the upper stage therebetween. The movable rollers 11 are disposed to partially overlap each other when seen in plan view. When the above-mentioned configuration is employed, a gap between the movable rollers 11 can be further reduced between two neighboring sets of movable roller units 10. Accordingly, a region in which the movable rollers 11 do not abut the packages n can be reduced.

Paper items such as letters or the like may have a size as large as A4 or the like. For this reason, in an arrangement structure of two stages of the movable rollers 11 in the movable roller unit 10 in the vertical direction, the two movable rollers 11 are installed on the upper stage, and the one movable roller 11 is installed on the lower stage. When a large amount of paper items or the like having a small size are provided, the two movable rollers 11 may be disposed on a lower stage and the one movable roller 11 may be disposed on an upper stage there between.

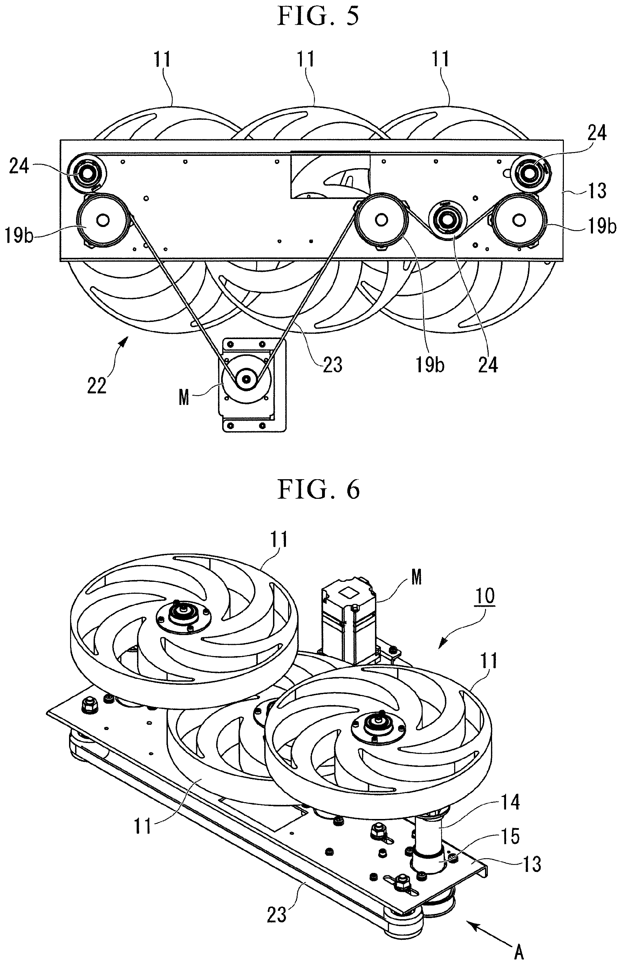

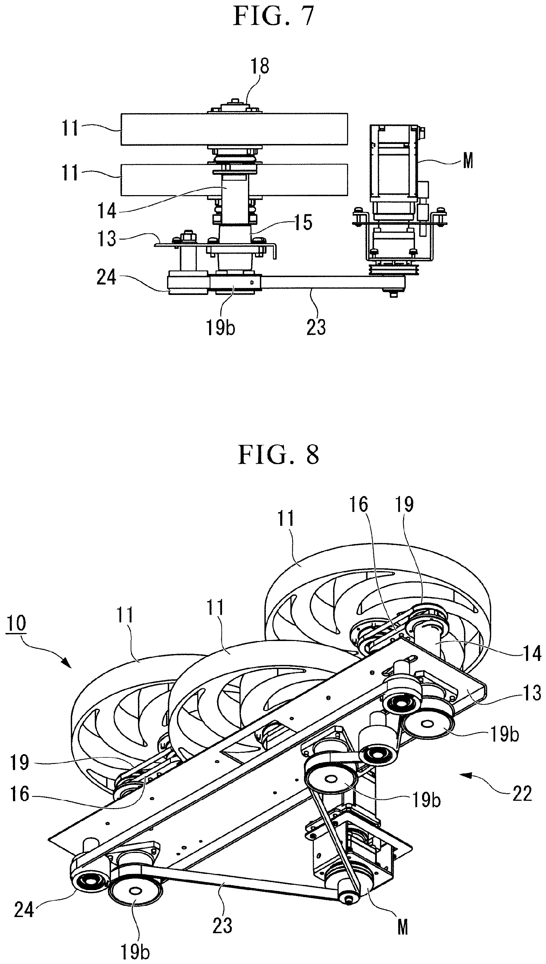

Next, a configuration of the movable roller unit 10 will be described with reference to Fig. 3 to Fig. 8. Fig. 3 to Fig. 6 show a plan view, a front view, a bottom view and a perspective view of the movable roller unit 10, respectively. Fig. 7 is a side view in which the movable roller unit 10 is seen in a direction A of Fig. 6, and Fig. 8 is a perspective view in which the movable roller unit 10 is seen from below.

As shown in the drawings, a base plate 13 extending in a delivery direction of the side belt 7 is installed on the movable roller unit 10. A pivot shaft 14 is supported by the base plate 13 to be pivotable with respect to the movable rollers 11. As shown in Fig. 6 and Fig. 7, the pivot shaft 14 is inserted into and rotatably supported by a support pipe 15 fitted to the base plate 13. As shown in Fig. 4 and Fig. 8, one end portion of a pivotable arm section 16 is connected to an upper section of the pivot shaft 14.

As shown in Fig. 4, the central shaft 18 is rotatably supported by the other end portion of the arm section 16, and the movable rollers 11 are integrally rotatably connected to the central shaft 18. A spring member (not shown) is mounted on the arm section 16 and the pivot shaft 14, and biased in a direction in which the movable rollers 11 abut the side belt 7. Further, a rotary shaft section 19 is rotatably inserted into the pivot shaft 14, and has upper and lower end portions protruding therefrom. As shown in Fig. 4, a first rotation transmission belt 20 is mounted between the central shaft 18 and a first pulley 19a fixed to the upper end portion protruding from the pivot shaft 14 of the rotary shaft section 19.

The above-mentioned configuration is installed on each of the movable rollers 11.

As shown in Fig. 5 and Fig. 8, a driving mechanism 22 of the movable rollers 11 is installed on a back surface side of the base plate 13.

A driving motor M serving as a driving device is installed in the vicinity of the base plate 13. As shown in the drawings, the lower end portion of the rotary shaft section 19 protrudes through the three pivot shafts 14 to the back surface of the base plate 13, and second pulleys 19b fixed to the lower end portion are disposed in which a diameter thereof increases. A second rotation transmission belt 23 having an endless form is wound on an output shaft of the driving motor M and the second pulleys 19b of the three rotary shaft sections 19 via a transmission roller 24 supported by the base plate 13.

Rotation of the driving motor M is transmitted to the rotary shaft section 19 from the second rotation transmission belt 23 via the second pulleys 19b. Accordingly, a rotating force is transmitted to the central shaft 18 from the first pulley 19a of the upper end portion via the first rotation transmission belt 20, and the movable rollers 11 are rotated about the central shaft 18. The movable rollers 11 and the central shaft 18 can be turned about the pivot shaft 14 via the arm section 16, and biased to the side belt 7 by the spring member of the arm section 16. That is, the movable rollers 11 are pivotably supported by the pivot shaft 14 via the arm section 16, and movable in a direction crossing a conveyance direction (a predetermined direction) of the packages n.

The movable rollers 11 fixed to the upper end portions of the central shafts 18 have a substantially circular disk shape formed of a soft deformable elastic member of sponge, rubber, or the like, and are rotatable about the central shaft 18. For example, elastic members are provided on outer circumferential surfaces of the movable rollers 11. The movable rollers 11 have substantially arc-shaped notches about the central shaft 18 at predetermined intervals in the circumferential direction. Accordingly, an outer circumferential surface 26a having a circular shape and an arc-shaped spoke section 26b configured to connect the outer circumferential surface 26a and a holding section of the central shaft 18 are provided.

The spoke section 26b is formed to be curved rearward from the central shaft 18 toward the outer circumferential surface 26a in a rotational direction. The spoke section 26b extends from a central part toward an outer circumferential surface. The movable rollers 11 are formed of sponge or the like having an elastic deformation force and have notches, and moreover, a biasing force of the spring member is small. For this reason, a pressing pressure of the packages n, by the movable rollers 11, is set to a low level. For this reason, no damage is generated in the packages n sandwiched between the side belt 7 and the movable rollers 11.

The case in which the packages n are sandwiched between the side belt 7 and the movable rollers 11 will be described. In this case, when a thickness of the package n is small, the outer circumferential surface 26a and the spoke section 26b of the movable rollers 11 that are rotating are elastically deformed and conveyed forward while holding the packages n. In addition, in this case, when a thickness of the package n is relatively large, the arm section 16 itself that supports the movable rollers 11 is pivoted in a direction in which the rollers are separated (away) from the side belt 7 against the biasing force of the spring member while the movable rollers 11 are elastically deformed. For this reason, the packages n can be sandwiched between the side belt 7 and the movable rollers 11 and conveyed forward with no damage to the packages n. In this way, the plurality of movable rollers 11 are installed in the vertical direction, and can be individually deformed or moved at least with respect to the side belt 7. In addition, the movable rollers 11 are pivotably supported by a pivot shaft via the arm section 16, and can be moved in a direction in which the rollers are separated from the side belt 7.

The movable rollers 11 may have an outer diameter several times greater than the thickness of the packages n between the side belt 7 and the movable rollers. When the outer diameter of the movable rollers 11 is substantially the same as or twice the width of the packages n, an inlet angle of the movable rollers 11 with respect to the side belt 7 is large. For this reason, the packages n are not sandwiched between the side belt 7 and the movable rollers 11 due to an increase in magnitude of impact and a decrease in conveyance speed or the like when the packages n collide therewith.

Meanwhile, when the outer diameter of the movable rollers 11 is 3 to 4 times larger than that of the packages n, an inlet angle of the movable rollers 11 with respect to the side belt 7 is reduced. For this reason, the packages n are gradually pushed and spread to enter between the side belt 7 and the movable rollers 11 while deforming the movable rollers 11. Accordingly, it is possible to minimize a decrease in conveyance speed by minimizing an impact due to a collision of the packages n.

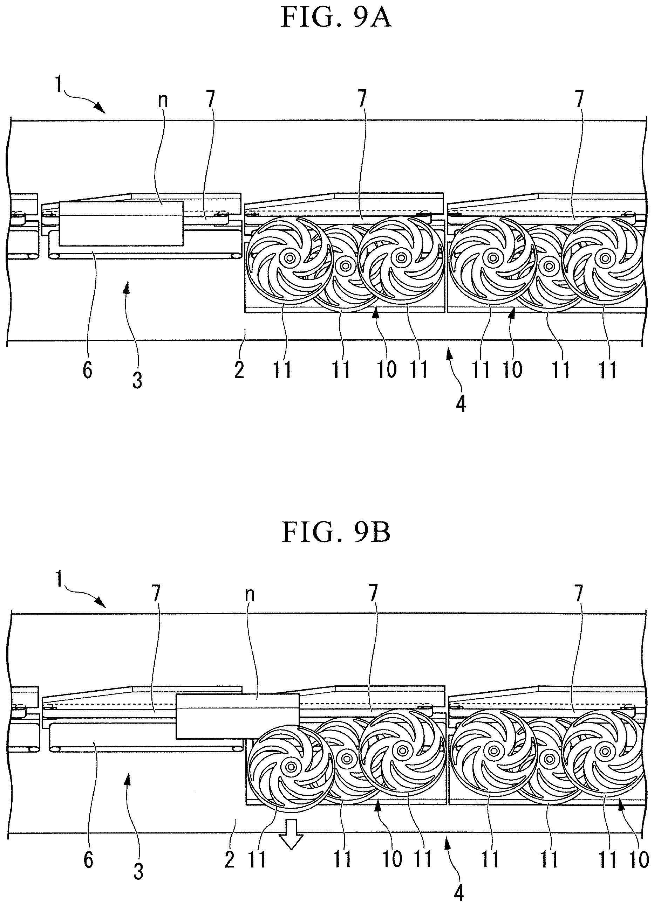

The conveyance device 1 according to the embodiment includes the above-mentioned configuration. Next, a conveyance method of the packages n will be described mainly with respect to Fig. 1 and Fig. 9A to Fig. 9C. Fig. 9A to Fig. 9C are plan views of a main part showing a flow of a conveying process of the packages n in the conveyance device 1 of the embodiment.

Fig. 9A is a view showing a state before the packages n are supplied to the movable roller unit 10. The packages n such as paper items such as letters or the like, packets or the like, which are adsorbed by a one-way transmission section (not shown), are delivered to the conveyance introduction section 3 of the conveyance device 1. In the conveyance introduction section 3 shown in Fig. 9A, the packages n move at the same speed as that of the bottom belt 6 and the side belt 7 while being disposed on the bottom belt 6 and supported by the side belt 7. The conveyance introduction section 3 has a short length. For this reason, the packages n are conveyed by the bottom belt 6 and the side belt 7 and transported to the conveyance main body section 4 with no folding even when the packages n are paper items having no middle portion.

When the packages n are delivered from the conveyance introduction section 3 to the conveyance main body section 4, the packages n are sandwiched between the side belt 7 and the movable rollers 11 on the upper stage at a small inlet angle between the side belt 7 and the movable rollers 11 on the upper stage of the movable roller unit 10. The packages n advance by gradually widening the inlet angle between the side belt 7 and the movable rollers 11 while the packages n press the outer circumferential surface 26a of the movable rollers 11 and compressively deform the outer circumferential surface 26a together with the spoke section 26b.

Fig. 9B is a view showing a state in which the packages n start to be supplied to the movable rollers. When the package n has a thickness, as shown in Fig. 9B, the movable rollers 11 are pressed by the packages n. Accordingly, the movable rollers 11 are pivoted around the pivot shaft 14 against a biasing force of the spring member provided on the arm section 16 and pivoted in a direction in which the movable rollers 11 are separated from the side belt 7. The movable rollers 11 are pressed in a state in which the outer circumferential surface 26a and the spoke section 26b are elastically deformed according to the thickness of the package n, rotate while maintaining a state in which the movable rollers abut the packages n due to an elastic recovering force of the spring member provided on the arm section 16, and convey the packages n forward.

The packages n are sandwiched between the side belt 7 and the movable rollers 11, and the movable rollers 11 are rotated at a speed synchronized with the bottom belt 6 and the side belt 7. Since the movable rollers 11 are formed of a soft material such as sponge or the like, a pressing pressure is decreased even when the packages n are pressed, and there is conveyance in a state in which the packages n are not damaged.

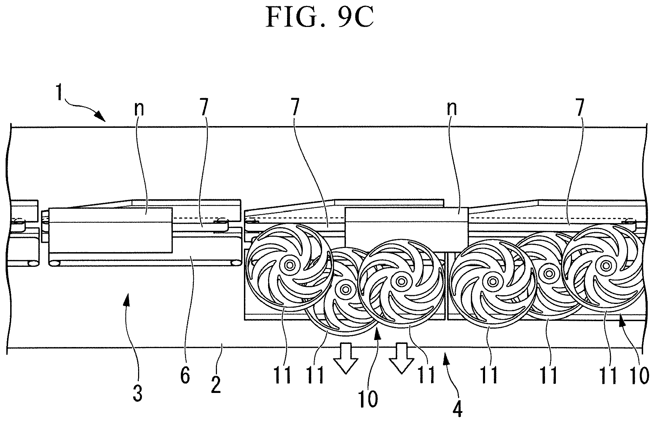

Fig. 9C is a view showing a state in which the packages n are conveyed by the side belt 7 and the movable rollers 11. As shown in Fig. 9C, according to conveyance of the packages n, in each of the movable rollers 11, the outer circumferential surface 26a and the spoke section 26b are gradually elastically deformed and pivoted around the pivot shaft 14. The movable rollers 11 elastically return to an original shape thereof after the packages n pass and abut the side belt 7 due to a biasing force of the spring member of the arm section 16. Further, when a thickness of the package n is small, the movable rollers 11 respond only by elastic deformation of the outer circumferential surface 26a and the spoke section 26b of the sponge. In addition, the movable rollers 11 pressed by the packages n can also be retracted in a direction in which the movable rollers 11 escape around the pivot shaft 14 while the outer circumferential surface 26a and the spoke section 26b are not elastically deformed. In this way, the movable rollers 11 may either be elastically deformed on the outer circumferential surface 26a and the spoke section 26b or just move away from the side belt 7.

Even when the packages n are a letter, a packet with no middle portion, according to an inlet angle between the side belt 7 and the movable rollers 11, upper portions of the packages n are pressed by the movable rollers 11 on the upper stage toward the side belt 7 to be conveyed forward, and then, the lower portions of the packages n are pressed by the movable rollers 11 provided on the lower stage. When the packages n are shifted to the movable rollers 11 at the lower position, even if the upper portion of a package n with no middle portion is likely to fold, the package n is pushed by the movable rollers 11 on the next upper stage before the package n folds. For this reason, the packages n can be prevented from folding.

In addition, even when the packages n are delivered from the movable roller unit 10 on the front side to the movable roller unit 10 on the rear side, the packages n are conveyed at the synchronized moving speed. For this reason, before the packages n are folded, the upper portions of the packages n can be pressed by the movable rollers 11 on the upper stage of the next movable roller unit 10. Accordingly, the delivery is completed, and folding of the packages n can be prevented.

Also, a case in which the package n is a letter in which a product sample or like is enclosed in only a part thereof may be illustrated. In this case, when the packages n are inserted between the side belt 7 and the movable roller unit 10, a portion of the upper section of the package n is pressed by the movable rollers 11 on the upper stage toward the side belt 7 to be conveyed. A convex section of the lower section of the package n presses the movable rollers 11 on the lower stage such that they retract around the pivot shaft 14, and is pressed by the outer circumferential surface 26a and the spoke section 26b that are elastically deformed. Then, the packages n are delivered to the movable rollers 11 on the next upper stage.

After the packages n pass through, the movable rollers 11 on the lower stage return to a position abutting the side belt 7 due to the biasing force of the spring member, and the outer circumferential surface 26a and the spoke section 26b also elastically return to their original shapes.

For this reason, even when the packages n such as paper items, packets, or the like, with no middle portion or the package n having a non-uniform thickness expanding to form a convex section only on a part thereof are provided, the packages n can be reliably conveyed when the packages n are pressed by the plurality of movable rollers 11 in sequence according to the shape thereof.

As described above, according to the conveyance device 1 of the embodiment, even when the packages n with no middle portion or the packages n having a non-uniform thickness are provided, the packages n can be reliably conveyed in an upright state with no damage to the packages n by the movable rollers 11 that are retractable and in which a pressing pressure is set to a low level due to a soft material such as sponge or the like.

Further, the present invention is not limited to the conveyance device 1 according to the above-mentioned embodiment. Appropriate modifications, substitutions, or the like, may be made without departing from the spirit of the above-mentioned embodiment and any one of them is included in the embodiment. Hereinafter, parts and members the same or substantially the same as the parts and members used in the other embodiments, variants, or the like, are designated by the same reference numerals, and the variants will be described using them.

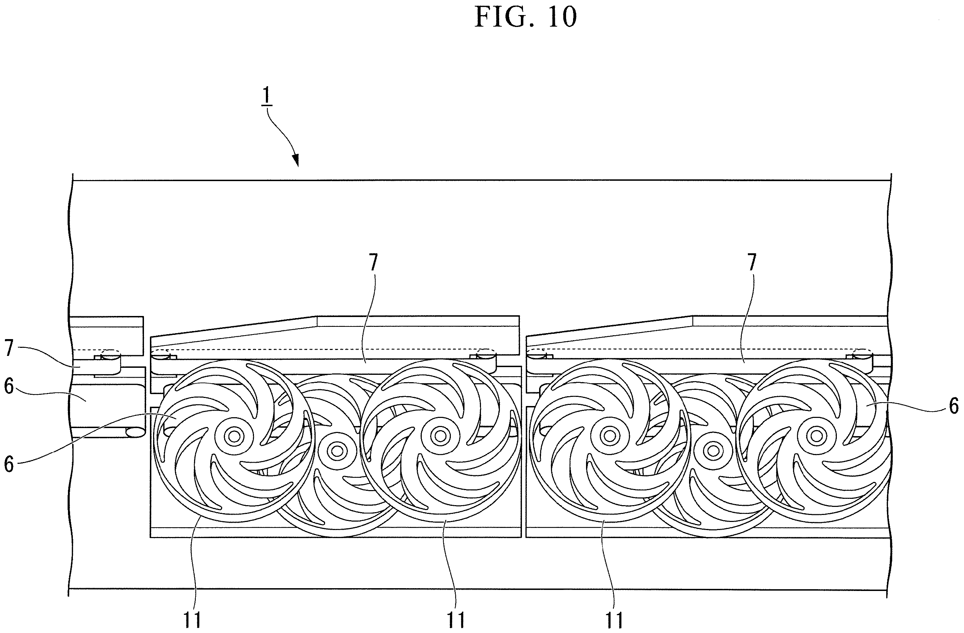

For example, the conveyance device 1 showing a minimum configuration of the embodiment is disclosed in Fig. 10.

That is, the conveyance device 1 of the embodiment includes a first guide member including the bottom belt 6 abutting a first surface of the package n that is an object to be conveyed and configured to guide the packages n in a predetermined direction, and a second guide member including the side belt 7 abutting a second surface of the package n and configured to guide the package n in a predetermined direction. For example, the bottom belt 6 abuts a bottom surface of the package n, and the side belt 7 abuts a side surface of the package n. In addition, as a minimum configuration, the conveyance device 1 of the embodiment is configured to include a presser roller including the movable rollers 11 that are at least deformable or movable in a direction away from the side belt 7 according to the thickness of the packages n while guiding the packages n in the predetermined direction with the packages n sandwiched between the side belt 7 and the movable rollers 11.

In addition, in the above-mentioned embodiment, the configuration in which the conveyance introduction section 3 with no the movable roller unit 10 is provided upstream from the conveyance main body section 4 in which the movable roller unit 10 including the movable rollers 11 is provided on the bottom belt 6 and the side belt 7 as the conveyance device 1 has been described. However, the conveyance introduction section 3 may not be provided. In at least the conveyance device 1, in addition to the bottom belt 6 and the side belt 7, the conveyance main body section 4 in which one or the plurality of movable rollers 11 are disposed may be installed along the side belt 7 at a position facing the side belt 7.

In the conveyance main body section 4, arbitrary plural sets of movable roller units 10 may be disposed to face the side belt 7.

The first conveyance member and the second conveyance member are not limited to an endless circumferential belt shown in the embodiment, and may be a plurality of rotating rollers or bar members arranged in a conveyance direction, a plate-shaped member that is movable in a forward/rearward direction, or the like.

In addition, in the above-mentioned embodiment, while all of the movable rollers 11 are formed of an elastic member such as sponge, rubber, or the like, the movable rollers 11 are not limited to the above-mentioned configuration. For example, the outer circumferential surface 26a abutting at least the packages n of the movable rollers 11 may be formed of an elastic member that is elastically deformable. The movable rollers 11 need not necessarily be rotated by the driving motor M and may be pressed against the packages n in a rotatable manner.

As another embodiment, a plurality of sets of conveyance main body sections 4 of the conveyance device 1 according to the above-mentioned embodiment are installed in series, and the conveyance main body sections 4 on a downstream side are movable in a direction crossing the conveyance direction of the packages n. In this case, a distribution device is configured to distribute the conveyed packages n to any one or the like of a plurality of collecting boxes of a sorting and collecting section.

In addition, as another embodiment, a sorting device is proposed. The sorting device includes an upstream-side conveyance device that is a one-way transmission section configured to send the packages n into the conveyance main body section 4 of the conveyance device 1 according to the above-mentioned embodiment one at a time, and a distribution device serving as a sorting and collecting section including a plurality of collecting boxes configured to convey and distribute the packages n sent to the conveyance device 1 from an upstream-side conveyance device toward a downstream side thereof.

Although some or all of these embodiments may also be disclosed in the following supplementary notes, but they are not limited to the following supplementary notes:

### (Supplementary Note 1)

A conveyance device, including:
a first guide member abutting a first surface of an object to be conveyed and configured to guide the object to be conveyed in a predetermined direction;
a second guide member abutting a second surface of the object to be conveyed and configured to guide the object to be conveyed in the predetermined direction; and
a presser roller that is at least deformable or movable in a direction away from the second guide member according to a thickness of the object to be conveyed while guiding the object to be conveyed sandwiched between the second guide member and the presser roller in the predetermined direction.

### (Supplementary Note 2)

The conveyance device according to Supplementary Note 1, wherein a driving device configured to rotate the presser roller is provided.

### (Supplementary Note 3)

The conveyance device according to Supplementary Note 1 or 2, wherein the presser roller has an elastic member provided on an outer circumferential surface thereof.

### (Supplementary Note 4)

The conveyance device according to Supplementary Note 3, wherein the presser roller has a spoke section extending from a central side toward the outer circumferential surface.

### (Supplementary Note 5)

The conveyance device according to any one of Supplementary Notes 1 to 4, wherein the presser roller is pivotably supported by a pivot shaft via an arm section and movable in a direction crossing the predetermined direction.

### (Supplementary Note 6)

The conveyance device according to any one of Supplementary Notes 1 to 5, wherein the plurality of presser rollers are installed at upper and lower sides, and installed to be deviated in the predetermined direction to partially overlap each other in the predetermined direction.

### (Supplementary Note 7)

The conveyance device according to any one of Supplementary Notes 1 to 6, wherein the plurality of presser rollers are installed at upper and lower sides, and are at least deformable or movable individually with respect to the second guide member.

### (Supplementary Note 8)

The conveyance device according to any one of Supplementary Notes 1 to 7, wherein the second guide member is disposed to be inclined with respect to a vertical direction.

### (Supplementary Note 9)

The conveyance device according to any one of Supplementary Notes 1 to 8, wherein the presser roller is rotated synchronously with the first guide member and the second guide member.

### (Supplementary Note 10)

A distribution device, in which the plurality of conveyance devices according to any one of Supplementary Notes 1 to 9 are installed in series, and the conveyance devices on a downstream side are movable in a direction crossing a conveyance direction of an object to be conveyed.

### (Supplementary Note 11)

A sorting device, including:
an upstream-side conveyance device configured to send an object to be conveyed to the conveyance device according to any one of Supplementary Statements 1 to 9; and
a distribution device configured to distribute the objects to be conveyed sent from the conveyance device.

### (Supplementary Note 12)

A conveyance method of a conveyance device including a first guide member abutting a first surface of an object to be conveyed and configured to guide the object to be conveyed in a predetermined direction, and a second guide member abutting a second surface of the object to be conveyed and configured to guide the object to be conveyed in the predetermined direction, the conveyance method including:
guiding the object to be conveyed sandwiched between the second guide member and a presser roller in the predetermined direction, elastically deforming at least the presser roller according to a thickness of the object to be conveyed or moving the presser roller in a direction away from the second guide member, and thus, conveying the object to be conveyed.

Priority is claimed on Japanese Patent Application No. 2017-044831, filed March 9, 2017, the content of which is incorporated herein by reference.

### INDUSTRIAL APPLICABILITY

According to the present invention, since a presser roller is at least deformable or movable in a direction in which the presser roller retreats with respect to a second guide member according to a thickness of an object to be conveyed, the object to be conveyed can be reliably held with no damage to the object to be conveyed. Moreover, even when the object to be conveyed has a non-uniform thickness or has no middle portion, the object to be conveyed can be reliably gripped and conveyed according to deformation or movement of the presser roller.

### [Reference Signs List]

1 Conveyance device
3 Conveyance introduction section
4 Conveyance main body section
6 Bottom belt
7 Side belt
10 Movable roller unit
11 Movable roller
14 Pivot shaft
16 Arm section
18 Central shaft
20 First rotation transmission belt
23 Second rotation transmission belt
26a Outer circumferential surface
26b Spoke section
M Driving motor

## Claims

1. A conveyance device, comprising:
a first guide member abutting a first surface of an object to be conveyed and configured to guide the object to be conveyed in a predetermined direction;
a second guide member abutting a second surface of the object to be conveyed and configured to guide the object to be conveyed in the predetermined direction; and
a presser roller that is at least deformable or movable in a direction away from the second guide member according to a thickness of the object to be conveyed while guiding the object to be conveyed sandwiched between the second guide member and the presser roller in the predetermined direction.

2. The conveyance device according to Claim 1, wherein a driving device configured to rotate the presser roller is provided.

3. The conveyance device according to Claim 1 or 2, wherein the presser roller has an elastic member provided on an outer circumferential surface thereof.

4. The conveyance device according to Claim 3, wherein the presser roller has a spoke section extending from a central side toward the outer circumferential surface.

5. The conveyance device according to any one of Claims 1 to 4, wherein the presser roller is pivotably supported by a pivot shaft via an arm section and movable in a direction crossing the predetermined direction.

6. The conveyance device according to any one of Claims 1 to 5, wherein the plurality of presser rollers are installed at upper and lower sides, and installed to be deviated in the predetermined direction to partially overlap each other in the predetermined direction.

7. The conveyance device according to any one of Claims 1 to 6, wherein the plurality of presser rollers are installed at upper and lower sides, and are at least deformable or movable individually with respect to the second guide member.

8. The conveyance device according to any one of Claims 1 to 7, wherein the second guide member is disposed to be inclined with respect to a vertical direction.

9. The conveyance device according to any one of Claims 1 to 8, wherein the presser roller is rotated synchronously with the first guide member and the second guide member.

10. A distribution device, in which the plurality of conveyance devices according to any one of Claims 1 to 9 are installed in series, and the conveyance devices on a downstream side are movable in a direction crossing a conveyance direction of an object to be conveyed.

11. A sorting device, comprising:
an upstream-side conveyance device configured to send an object to be conveyed to the conveyance device according to any one of Claims 1 to 9; and
a distribution device configured to distribute the objects to be conveyed sent from the conveyance device.

12. A conveyance method of a conveyance device comprising a first guide member abutting a first surface of an object to be conveyed and configured to guide the object to be conveyed in a predetermined direction, and a second guide member abutting a second surface of the object to be conveyed and configured to guide the object to be conveyed in the predetermined direction, the conveyance method comprising:
guiding the object to be conveyed sandwiched between the second guide member and a presser roller in the predetermined direction, elastically deforming at least the presser roller according to a thickness of the object to be conveyed or moving the presser roller in a direction away from the second guide member, and thus, conveying the object to be conveyed.
